# EUROPÄISCHE PATENTANMELDUNG

(11) **EP 1 775 419 A1**
(43) Veröffentlichungstag der Anmeldung: **18.04.2007**
(21) Anmeldenummer: 06021407.9
(22) Anmeldetag: 12.10.2006
(51) Int. Cl.: E06C 7/18, E06C 9/02

(54) **Turmleiter**

(30) Priorität: 14.10.2005 DE 102005049288
(71) Anmelder: Zarges Aluminium Systeme GmbH, 82362 Weilheim (DE)
(72) Erfinder: Pfleger, Stefan, 86492 Egling (DE)
(74) Vertreter: Baronetzky, Klaus

(57) **Zusammenfassung**

Die Erfindung betrifft eine Turmleiter, insbesondere für die Innenbesteigung von Windkraftanlagen, mit einer Steigschutzsicherung, die sich an der Leiter, insbesondere als Steigschutzschiene vor den Stufen oder Sprossen der Leiter erstreckt. Die Leiter ist mehrteilig ausgebildet und jede Einzelleiter ist für sich gelagert. Die Einzelleiter ist als Hängeleiter oben an einer Aufhängung aufgehängt und unterhalb der Aufhängung, insbesondere nahe ihres unteren Endes, über eine Horizontalabstützung gegen Horizontalkräfte abgestützt.

## Beschreibung

Die Erfindung betrifft eine Turmleiter, gemäß dem Oberbegriff von Anspruch 1.

Turmleitern sind regelmäßig an turmartigen Bauwerken vorgesehen, um die Türme zur Wartungszwecken, aber auch zur Kontrolle besteigen zu können. Hier seien unter turmartige Bauwerke beispielsweise auch aufgelassene Schornsteine zu verstehen, die für den Betrieb einer Windkraftanlage umgerüstet sind, aber auch beliebige andere insofern realisierbare Türme. Typischerweise sind derartige Türme recht hoch, so dass gemäß den Sicherheitsvorschriften eine Steigschutzsicherung erforderlich ist. Die Steigschutzsicherung kann entweder durch ein Seil oder durch eine Schiene realisiert sein, die an der Turmleiter befestigt ist und einen Steigschutzläufer in an sich bekannter Weise führt und trägt.

Gerade auch bei Windkraftanlagen, aber auch bei anderen Türmen, ist man bestrebt, einen möglichst geringen Materialeinsatz im Verhältnis zur Festigkeit und Steifheit der Konstruktion aufzubringen. Grund ist unter anderem, dass das Eigengewicht des Turms die Konstruktion im unteren Bereich belastet, so dass typischerweise unten mit einem größeren Materialeinsatz als oben gearbeitet werden muß.

Für derartige Türme, zu denen auch Antennentürme, einschließlich sogenannter Fernsehtürme, die häufig im oberen Bereich auch noch Drehrestaurants tragen, gehören, hat sich eine Betonbauweise bewährt, wobei der Turm aus einer Vielzahl von Einzel-Turmstücken von 10 bis 25 m zusammengesetz ist. Die Turmstücke sind über spezielle Flanschringe miteinander verbunden und bestehen aus speziellem Stahlbeton oder Spannbeton, so dass sie ein vergleichsweise geringes Gewicht im Verhältnis zu ihrer Festigkeit haben. Insbesondere wird hier die gute Druckfestigkeit von Beton ausgenutzt.

Beispielsweise ist aus der DE-GM 94 07 220 ein Turm aus Schleuderbetonrohren bekannt, bei der sich die Einzel-Turmstücke zwischen den dortigen Plattformen erstrecken. Zum Besteigen der Türme ist eine Steigleiter vorgesehen, die je außen oder innen an dem betreffenden rohrförmigen Turmstück angebracht ist, wobei die genannte Veröffentlichung auch ein Umsteigen zwischen den drei Pfeilern vorsieht.

Zwar sind Einzelleitern bekannt, die sich durchaus über eine Länge von beispielsweise 15 m erstrecken können. Eine derartige Leiter wird typischerweise mit Haltern für diese Steigleiter angebracht, beispielsweise mit einem Halter für je drei Meter Steighöhe. Damit wird ein Durchbiegen der Leiter sicher verhindert, auch wenn beispielsweise drei Bedienpersonen das betreffende Teilstück oder die Einzelleiter gleichzeitig betreten.

Sowohl Stahl als auch Aluminium hat typischerweise einen anderen Wärmeausdehnungskoeffizient als Beton. Daher müssen die Befestigungselemente, insbesondere auch die Halter der Steigleiter die Hoch-Tief-Bewegung aufgrund von Temperaturveränderungen zwischen der Einzelleiter und dem Stahlbeton kompensieren können. Man bringt hierzu entsprechende Schiebeführungen an den Bolzen an, was vergleichsweise aufwändig ist.

Insbesondere ist auch nachteilig, dass die Bolzen die Betonhülle schwächen. Sie verlaufen regelmäßig zueinander fluchtend, so dass sie wie eine Art Perforation der Betonhülle wirken.

Um dennoch die erforderliche Sicherheit bereitstellen zu können, muss daher die Betonhülle mit einer größeren Wandstärke vorgesehen sein, als es statisch an sich erforderlich wäre.

Um diesen Nachteil hinsichtlich der Stärke des Betons zu vermeiden, ist es bereits vorgeschlagen worden, anstelle von Stehbolzen Klebeflächen zu verwenden. Diese müssen aufgrund der vergleichsweise großen Wirkungskräfte recht großflächig sein, beispielsweise 20 x 20 cm. Die Klebeflansche müssen zudem exakt der Biegung der Innenform des Turms folgend ausgebildet sein. Hier kommt erschwerend hinzu, dass der Turmdurchmesser häufig von unten nach oben abnimmt, so dass mit unterschiedlich gebogenen Klebeflanschen gearbeitet werden muß, und es darf keinenfalls zu Verwechslungen kommen, da bei unterschiedlichen Biegungen zwischen Klebeflansch und Innenseite des Turms eine nur sehr geringe Klebefläche vorliegt, so dass keine sichere Klebeverankerung gewährleistet ist.

Derartige Verklebungen haben sich daher nicht durchgesetzt, zumal auch derartige Klebeverbindungen recht empfindlich für Scherbelastungen sind, wie sie durch die Änderungen der Relativlänge von Betonschuß und Einzelleiter erzeugt werden.

Auch ist bereits vorgeschlagen worden, auf Steigleitern an Windkrafttürmen vollständig zu verzichten. Windkraftanlagen sind andererseits recht wartungsintensiv, so dass zur Wartung stets ein Lasthubschrauber eingesetzt werden muß, der die Bedienperson an dem Generator absetzen müsste. Dies ist bei sich drehenden Flügeln des Windrotors praktisch nicht möglich.

Daher liegt der Erfindung die Aufgabe zugrunde, eine Turmleiter gemäß dem Oberbegriff von Anspruch 1 zu schaffen, die ein besseres Gewichts-/Festigkeitsverhältnis des Turm ermöglicht, wobei auch die Wartungskosten gering sein sollen.

Diese Aufgabe wird erfindungsgemäß durch Anspruch 1 gelöst. Vorteilhafte Weiterbildungen ergeben sich aus den Unteransprüchen. Erfindungsgemäß besonders günstig ist es, dass die erfindungsgemäße Turmleiter aus Einzelleitern ausgebildet ist, die sich halterfrei zwischen Flanschen des Turms erstrecken. Jede Einzelleiter ist oben an einer Aufhängung an dem betreffenden Flansch oder der Plattform aufgehängt, während unten, also an dem nächst darunterliegendem Flansch des Einzel-Turmstücks, eine Abstützung lediglich gegen Horizontalkräfte vorliegt.

Überraschend ergibt diese Art der Lagerung eine ausreichende Festigkeit, um die erwünschte Besteigbarkeit mit drei Personen sicher zu gewährleisten. Die S-Durchbiegung der Leiter bleibt innerhalb des zulässigen Rahmens, und auch die Längung durch die Belastung beträgt lediglich wenige Zentimeter, auch bei einer Länge der Einzelleiter von 20 oder sogar 25 m.

In diesem Zusammenhang ist es bevorzugt, unten an der Einzelleiter einen Dehnspalt vorzusehen, an welchem die Leiternholme bei kälteren Temperaturen einen deutlichen Abstand von den Leiternholmen der nächstunteren Einzelleiter haben.

Bevorzugt wird seewasserfestes Aluminium für die Leiternholme und Sprossen verwendet, das einen größeren Wärmeausdehnungskoeffizient als Beton hat. Der zulässige Betriebstemperaturbereich von beispielsweise -30°C bis +50°C lässt sich durch einen Dehnspalt von etwas über 3 % der Leiternlänge ohne weiteres einhalten; die Leiternstreckung aufgrund der Belastung durch die drei Bedienpersonen liegt eine Größenordnung unter der maximalen thermischen Dehnung.

Erfindungsgemäß besonders günstig ist es, dass durch die Aufhängung der Einzelleiter je eine geringere Materialstärke für die Holme erforderlich ist als bei einer Stehleiter. Insbesondere lässt sich sicher verhindern, dass die Leiter durch Belastung einknickt; auch asymmetrische Belastungen durch zu einer Seite hin verlagertes Besteigen - beispielsweise wenn die Bedienperson seitlich der Leiter arbeiten muß - ist erfindungsgemäß überraschend weniger kritisch. Die geringere erforderliche Holmstärke der Leiter führt jedoch auch zu einem geringeren Leitereigengewicht, was wiederum dem Vorteil zugute kommt, dass die Konstruktion insgesamt leichter ist und den Turm insofern auch weniger belastet.

Durch den Verzicht auf Klebehalterungen lässt sich die Montage wesentlich erleichtern, und durch den Verzicht auf Stehbolzen lässt sich die Wandstärke der den Turm bildenden Stahlrohre oder Betonhülle auf das minimal Mögliche reduzieren. Auch ist die Fehlerquote geringer, nach dem die Bolzen entfallen und nicht gesondert eingebaut werden müssen.

Die Leitern selbst können vergleichsweise schnell und leicht gewartet und überprüft werden, denn die bislang erforderliche aufwändige Überprüfung jedes einzelnen Stehbolzen kann erfindungsgemäß entfallen.

In besonders günstiger Weise lässt sich eine erfindungsgemäße Leiter über ihre Sprossen aufhängen. Sprossen sind bei dieser vorteilhaften Ausgestaltung in an sich bekannter Weise hohl; sie können von Verankerungsstäben ohne weiteres durchtreten werden, so dass die Leiter erfindungsgemäß über die Sprosse am Holm sicher aufhängbar ist.

Gleiches gilt im Grunde für die Horizontalabstützung unten an der Einzelleiter, wobei es hier gegebenenfalls auch ausreicht, eine Verankerung lediglich über eine Sprosse zu realisieren.

Weitere Vorteile, Einzelheiten und Merkmale ergeben sich aus den nachfolgenden Beschreibungen eines Ausführungsbeispiels der Erfindung anhand der Zeichnung.

Es zeigen:

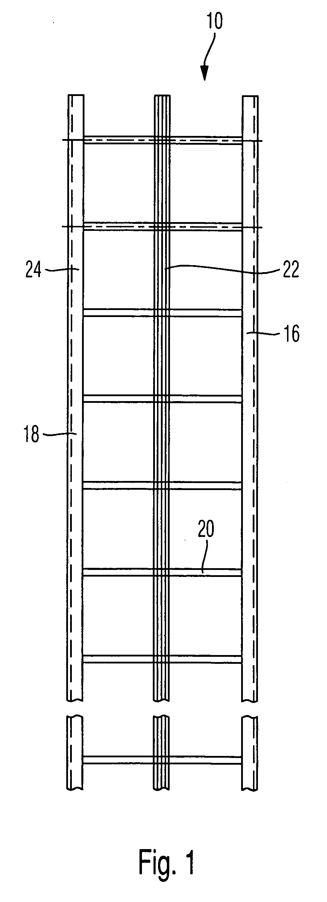

- Fig. 1: eine schematische Ansicht einer erfindungsgemäßen Turmleiter, unter Darstellung eines Teilstücks, in der Ansicht von vorne;
- Fig. 2: eine Detailansicht einer erfindungsgemäßen Turmleiter, nämlich der Aufhängung; und
- Fig. 3: eine Seitenansicht eines weiteren Details einer Ausführungsform der erfindungsgemäßen Turmleiter, nämlich der Horizontalabstützung und Vertikalführung am unteren Ende der Einzelleiter.

Das in den Figuren dargestellte Ausführungsbeispiel weist eine Turmleiter 10 auf, die innen in einem Turm 12 einer Windkraftanlage angebracht ist. Der Turm 12 besteht aus einer Mehrzahl, beispielsweise fünf, übereinander angeordnet zueinander ausgerichteten Einzel-Turmstücken, die je mit einem Flansch 14 miteinander verbunden sind. In dem dargestellten Ausführungsbeispiel besteht der Turm aus Stahlrohren mit entsprechendem Durchmesser, wobei es sich versteht, dass anstelle dessen auch eine Betonkonstruktion möglich ist.

Der Flansch 14 erstreckt sich kreisringförmig und außen bündig mit den Einzel-Turmstücken. Die erfindungsgemäße Turmleiter 10 erstreckt sich in einem Abstand, der 10 bis 40 cm betragen kann und beispielsweise etwa 20 cm beträgt vor dem Turm 12. Die Turmleiter 10 weist in an sich bekannter Weise Holme 16 und 18 auf, zwischen denen sich Sprossen erstrecken.

In dem dargestellten Ausführungsbeispiel weisen die Sprossen einen im Wesentlichen quadratischen Querschnitt mit abgerundeten Ecken auf. Bevorzugt ist es, wenn die Holme doppelwandig ausgebildet sind und die Sprossen unter Vorspannung beim Durchtreten beider Holmwände endseitig umgebördelt sind. Wenn dann innen der Umbördelung gegenüberliegend die Sprossen der Holmwand benachbart auch noch aufgeweitet sind, liegt eine sehr feste und steife Konstruktion vor, die dennoch vergleichsweise leichtgewichtig ist und zudem preisgünstig herzustellen ist. Derartige Leitern sind erfindungsgemäß als Hängeleitern bevorzugt, wobei es sich jedoch versteht, dass auch nach Wahl des Kunden andere Leiterntypen, bei Bedarf sogar mit Stufen, in Betracht kommen.

Erfindungsgemäß weist die Leiter eine Steigschutzsicherung auf. In dem dargstellten Ausführunsgbeispiel ist die Steigschutzsicherung als Steigschutzschiene 22 ausgebildet, die sich vor den Sprossen erstreckt und dort geführt ist.

Die Steigschutzschiene 22 ist entweder aus feuerverzinktem Stahl oder aus dem gleichen Material wie eine Einzelleiter 24, also beispielsweise aus seewasserfesten Aluminium. Der Wärmeausdehnungskoeffizient ist dann grundsätzlich gleich. Wenn jedoch spezielle Vorkehrungen getroffen sind, zwischen den Einzelleitern 24 die Wärmeausdehnung zu kompensieren, müssen entsprechende Vorkehrungen auch für die Steigschutzschiene 22 getroffen werden. Hier ist es erfindungsgemäß bevorzugt, die Steigschutzschiene - beispielsweise an der mittleren Einzelleiter 24 - fest zu lagern und dann an den anderen Einzelleitern die Schiebeführungen vorzusehen, die eine thermische Ausdehnung ermöglichen, ohne dass zusätzliche Kräfte in die Einzelleitern 24 eingeleitet würden.

In an sich bekannter Weise hat die Anbringung einer Steigschutzschiene 22 zentral vor den Sprossen den Vorteil, dass die Leiter ohne weiteres besteigbar bleibt.

In vorteilhafter Ausgestaltung ist zusätzlich eine Befahranlage mit einem Befahrkorb vorgesehen, wobei die Rollen des Befahrkorbs in an sich bekannter Weise die Holme hintergreifen und die Steigschutzschiene 22 unabhängig von der Befahranlage realisierbar ist.

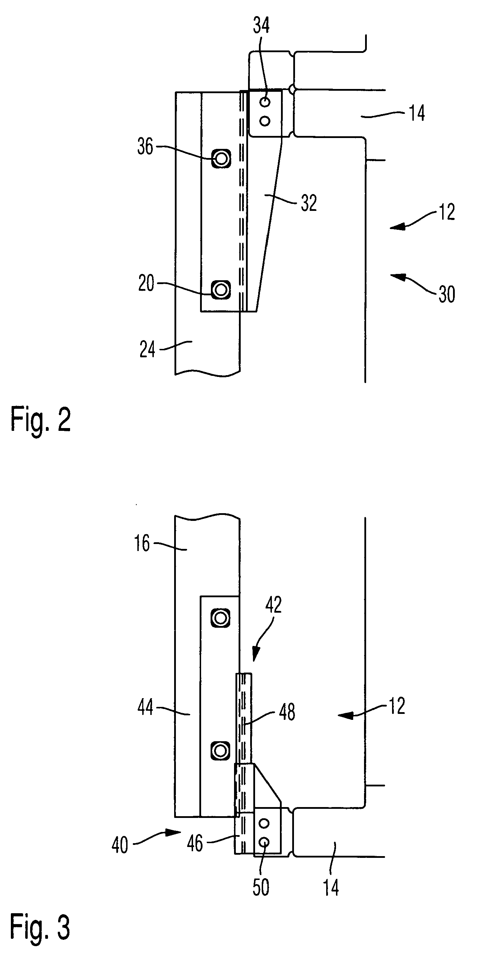

Aus Fig. 2 ist ersichtlich, in welcher Weise eine Aufhängung 30 für die Einzelleiter 24 an dem Flansch 14 realisiert sein kann. Der Flansch 14 weist bauseitig ein Schwert auf, das sich über eine Höhe von beispielsweise 30 oder 35 cm nach unten erstreckt. Das Schwert 32 ist mit zwei Schraubbolzen 34 an dem Flansch 14 gelagert. In dem dargestellten Ausführungsbeispiel erfolgt die Aufhängung 30 über Stäbe 36, die die Sprossen 20 je durchtreten und seitlich an dem Schwert 32 befestigt sind. Das Schwert ist in der Draufsicht im Wesentlichen U-förmig und umgreift die Holme 16 und 18 der Einzelleiter 14. Bevorzugt ist an den Stäben 36 ein Gewinde vorgesehen, so dass die Stäbe 36 auch als Gewindestangen ausgebildet sein können. Ihr Durchmesser ist so bemessen, dass er in satter Anlage in die hohlen Sprossen 30 passt; dem steht nicht entgegen, dass die Sprossen 20 in dem dargestellten Ausführungsbeispiel im Wesentlichen quadratisch, die Stäbe hingegen rund sind.

Durch die Aufteilung der Hänqekraft auf zwei Stäbe 36 wird die Krafteinleitung vergleichmäßigt; die Einzelleiter 24 hängt üblicher ihre gesamte Höhe von beispielsweise 24 m an der Aufhängung 30, die dementsprechend das Gewicht der Leiter abstützt, sowie gegebenenfalls zusätzlich die Belastung durch eine Bedienperson oder mehrere Bedienpersonen, was regelmäßig nur kurzzeitig erfolgt.

Aus Fig. 3 ist ersichtlich, in welcher Weise eine Horizotalabstützung 40 unten am Ende der Leiter ausgebildet sein kann. Die Horizontalabstützung 40 weist eine Vertikalführung 42 auf, die eine vertikale Relativbewegung zwischen dem unteren Ende der Leiter und dem dortigen Flansch 14 des Turms 12 ermöglicht. Die Vertikalführung 42 besteht aus seitlich der Holme 16 und 18 angebrachten Hülsen 46, in denen ein holmfester Stab je vertikal geführt ist. Hierdurch lässt sich eine Abstützung der Kräfte weg von der Betonwand des Turms 12 als auch zur Betonwand des Turm 12 hin sicher gewährleisten, also eine Abstützung gegen Horizontalkräfte, wobei es sich versteht, dass die Hülse 46 an dem Flansch 14 über Schraubbolzen 50 befestigt ist.

## Patentansprüche

1. Turmleiter, insbesondere für die Innenbesteigung von Windkraftanlagen, mit einer Steigschutzsicherung, die sich an der Leiter, insbesondere als Steigschutzschiene vor den Stufen oder Sprossen der Leiter erstreckt, wobei die Leiter mehrteilig ausgebildet ist und jede Einzelleiter für sich gelagert ist, **dadurch gekennzeichnet, dass** die Einzelleiter (24) als Hängeleiter oben an einer Aufhängung (30) aufgehängt ist und unterhalb der Aufhängung (30), insbesondere nahe ihres unteren Endes (44), über eine Horizontalabstützung (40) gegen Horizontalkräfte abgestützt ist.

2. Turmleiter nach Anspruch 1, **dadurch gekennzeichnet, dass** der Turm (12) aus einer Vielzahl von Einzel-Turmstücken besteht, die über Flansche (14) miteinander verbunden sind und dass jede Aufhängung (30) einer jeden Einzelleiter an einem Flansch (14) vorgesehen ist.

3. Turmleiter nach einem der vorhergehenden Ansprüche, **dadurch gekennzeichnet, dass** die Einzelleiter (24) über ihren Verlauf frei von Befestigungen und/oder Verankerungen sind.

4. Turmleiter nach einem der vorhergehenden Ansprüche, **dadurch gekennzeichnet, dass** die Aufhängung (30) auf mindestens zwei Stufen oder Sprossen (20) der Einzelleiter wirkt, insbesondere auf die beiden obersten Stufen oder Sprossen (20).

5. Turmleiter nach einem der vorhergehenden Ansprüche, **dadurch gekennzeichnet, dass** an dem unteren Ende der Einzelleiter (24) eine Vertikalführung (42) gelagert ist, über welche eine vertikale Bewegung des unteren Endes der Einzelleiter (24) ausgleichbar ist.

6. Turmleiter nach einem der vorhergehenden Ansprüche, **dadurch gekennzeichnet, dass** die Aufhängung (30) jeder Einzelleiter (24) vertikal einstellbar ist und dass die Höheneinstellung der Einzelleiter passend zum Stufenraster der nächstunteren Einzelleiter eingestellt wird.

7. Turmleiter nach einem der vorhergehenden Ansprüche, **dadurch gekennzeichnet, dass** die Einzelleitern (24) - gegebenenfalls abgesehen von der untersten Einzelleiter - eine Länge von mehr als 15 m, insbesondere mehr als 20 m und bevorzugt etwa 25 m aufweisen.

8. Turmleiter nach einem der vorhergehenden Ansprüche, **dadurch gekennzeichnet, dass** jede Einzelleiter (24) eine Mehrzahl von miteinander verlaschten Einzelleiterstücken aufweist und dass die Laschen ein Biege-Widerstandselement aufweisen, das mindestens dem Biege-Widerstandselement von Holmen der Einzelleiter entspricht.

9. Turmleiter nach einem der vorhergehenden Ansprüche, **dadurch gekennzeichnet, dass** jede Einzelleiter (24) eine Vielzahl von Sprossen (20) und zwei Holme aufweist, wobei die Sprossen-/Holmverbindung unter Vorspannung realisiert ist und insbesondere die Sprosse einer Holm-Seitenwand benachbart innen aufgeweitet ist.

10. Turmleiter nach einem der vorhergehenden Ansprüche, **dadurch gekennzeichnet, dass** jede Einzelleiter (24) von der nächstbenachbarten Leiter beabstandet aufgehängt ist, wobei der Abstand 2 bis 5 und bevorzugt etwa 3,5 % der Leiterlänge beträgt.

11. Turmleiter nach einem der vorhergehenden Ansprüche, **dadurch gekennzeichnet, dass** die Horizontalabstützung (40) am unteren Ende (44) der Einzelleitern (24) eine Buchse (46) aufweist, die vertikal ausgerichtet ist und über welche das untere Ende der Einzelleiter (24) gegen horizontal wirkende Kräfte abgestützt ist.

12. Turmleiter nach einem der vorhergehenden Ansprüche, **dadurch gekennzeichnet, dass** eine Hülse (46) für die Horizontalabstützung (40) des unteren Endes der Einzelleiter je an einem Holm (16 und 18) der Einzelleiter angeflanscht ist und ein in der Hülse (46) schiebebeweglich geführter Haltestab (48) an dem Flansch (14) des Turm (12) befestigt ist.

13. Turmleiter nach einem der vorhergehenden Ansprüche, **dadurch gekennzeichnet, dass** eine Steigschutzschiene (22) parallel zu den Einzelleitern (24) geführt ist, insbesondere zentral in der Mitte vor den Stufen oder Sprossen.

14. Turmleiter nach dem Anspruch 13, **dadurch gekennzeichnet, dass** die Steigschutzschiene (22) an einer Einzelleiter (24) fest und mindestens an einer Einzelleiter (24) schiebebeweglich gelagert ist.

15. Turmleiter nach einem der vorhergehenden Ansprüche, **dadurch gekennzeichnet, dass** die Steigschutzschiene (22) Schiebemuffen aufweist, über welche ein Steigschutzläufer frei laufen kann, und mit welchen eine relative Längenänderung zwischen Leiter und Steigschutzschiene (22) aufgrund von Temperaturschwankungen ausgleichbar ist.

16. Turmleiter nach einem der vorhergehenden Ansprüche, **dadurch gekennzeichnet, dass** die Aufhängung (30) und/ oder die Horizontalabstützung (40) jeder Einzelleiter (24) an bauseitigen Schwertern (32) vorgesehen ist.

17. Turmleiter nach einem der vorhergehenden Ansprüche, **dadurch gekennzeichnet, dass** die Turmleiter (10) kompatibel zu einem Fahrkorb einer Befahranlage ausgebildet ist.
